# EUROPEAN PATENT SPECIFICATION

(11) **EP 4 237 898 B1**
(45) Date of publication and mention of the grant of the patent: **28.01.2026**
(21) Application number: 20807316.3
(22) Date of filing: 12.11.2020
(51) Int. Cl.: G02B 26/10

(54) **MICROMECHANICAL RESONATOR ASSEMBLY WITH EXTERNAL ACTUATOR**
MIKROMECHANISCHE RESONATORANORDNUNG MIT EXTERNEM AKTUATOR
ENSEMBLE RÉSONATEUR MICROMÉCANIQUE À ACTIONNEUR EXTERNE

(43) Date of publication of application: 06.09.2023
(73) Proprietor: Huawei Technologies Co., Ltd., Shenzhen, Guangdong 518129 (CN); Fraunhofer-Gesellschaft zur Förderung der angewandten Forschung e.V., 80686 München (DE)
(72) Inventor: MARAUSKA, Stephan, 25524 Itzehoe (DE); HOFMANN, Ulrich, 25524 Itzehoe (DE); JANICKE, Christian, 25524 Itzehoe (DE); ZORLUBAS, Berkan, 25524 Itzehoe (DE); SCHRÖDER, Saskia, 25524 Itzehoe (DE); ALBERS, Jörg, 25524 Itzehoe (DE); HEINRICH, Felix, 25524 Itzehoe (DE); CAO, Yong, 80992 Munich (DE)
(74) Representative: Körber, Martin Hans
(86) International application number: PCT/EP2020/081826
(87) International publication number: WO 2022/100830

(56) References cited:
- US-B2- 9 054 636

## Description

### TECHNICAL FIELD

The present disclosure relates generally to the field of micro-electro-mechanical devices, and more specifically, to a micromechanical resonator assembly with an external actuator.

### BACKGROUND

Generally, micro-electro-mechanical system (MEMS) is a technology that is defined in terms of miniaturized mechanical or electromechanical elements which are made of using microfabrication techniques. Typically, physical dimensions of the mechanical or electromechanical elements varies from one micrometer to hundreds of micrometer (100×10⁻⁶).

Typically, a conventional micromechanical resonator (e.g. a conventional micromechanical resonator assembly) may include MEMS mirrors which are actuated either by use of internal piezo-electric thin film layers, or electrostatic comb drives, or by magnetic force stimulation. The conventional micromechanical resonator based on aforesaid internal actuation solutions has limited actuation energy and therefore, manifests short scan angles for one dimensional (1D) as well as two dimensional (2D) conventional MEMS mirrors. The reason behind the limited actuation energy is low energy transfer from a conventional actuation structure to the MEMS mirrors of the conventional micromechanical resonator. Moreover, existing micromechanical resonators manifest high power consumption and slow start-up time, which is not desirable. It is observed that externally actuating the conventional MEMS mirrors of the conventional micromechanical resonator does not manifest an optimal actuation geometry hence, does not provide a satisfactory performance. Thus, there exists a technical problem of an inefficient micromechanical resonator that manifests short scan angles, high power consumption, slow start-up time and also a high manufacturing cost.

Therefore, in light of the foregoing discussion, there exists a need to overcome the aforementioned drawbacks associated with conventional micromechanical resonators.

US 9,054,636 B2 discloses a micromechanical resonator arrangement, including a micro-mirror scanner with an inner actuator, which comprises an oscillation body capable of oscillate about at least one axis, and with an outer actuator with an oscillating part. The inner and outer actuator form a coupled oscillation system, and the outer actuator is driven by an external drive.

### SUMMARY

The present disclosure seeks to provide a micromechanical resonator assembly with an external actuator that manifests extremely large scan angles, low power consumption, fast start-up time and also a low manufacturing cost. The present disclosure seeks to provide a solution to the existing problem of an inefficient micromechanical resonator that manifests short scan angles, high power consumption, slow start-up time and also a high manufacturing cost. An aim of the present disclosure is to provide a solution that overcomes at least partially the problems encountered in the prior art and provides an improved micromechanical resonator assembly with extremely large scan angles at low power consumption.

The object of the present disclosure is achieved by the solutions provided in the enclosed independent claims. Advantageous implementations of the present disclosure are further defined in the dependent claims. In the following, parts of the description and drawings referring to embodiments which are not covered by the claims are not presented as embodiments of the invention, but as examples useful for understanding the invention.

In one aspect, the present disclosure provides a micromechanical resonator assembly comprising an internal actuator which comprises an oscillation body configured to oscillate about one or more axes, the oscillation body having one or more eigen frequencies. The micromechanical resonator assembly further comprises an external actuator which comprises an oscillating part. The micromechanical resonator assembly further comprises a mounting base which comprises electronic driving part. The internal actuator being mounted with the external actuator so as to form a coupled oscillation system. The external actuator being mounted on the mounting base and being electrically connected to the electronic driving part, for allowing excitation of the oscillation body of the internal actuator by transfer of energy from the oscillating part to the oscillation body. The electrical connection between the external actuator and the driving part is obtained through wire bonding.

The micromechanical resonator assembly of the present disclosure provides external actuation of the oscillation body of the internal actuator by use of the external actuator. Therefore, high actuation energy is transferred to the oscillation body in comparison to a conventional micromechanical resonator. The conventional micromechanical resonator uses internal actuation of a conventional oscillation body which results in to low energy transfer and hence, manifests short scan angles. The disclosed micromechanical resonator assembly provides extremely large scan angles that is from 110° to 180° for one dimensional (1D) oscillation body because of the transfer of high actuation energy to the oscillation body. The disclosed micromechanical resonator assembly provides extremely fast start-up time that is reduced from 10s down to <1s in comparison to the conventional micromechanical resonator. Moreover, the disclosed micromechanical resonator assembly is manufacturable at high volume because of the use of semiconductor assembly process. The disclosed micromechanical resonator assembly is cost efficient and has robust quality. Additionally, the disclosed micromechanical resonator assembly provides a reduced power consumption and easy handling when in operation.

In an implementation form, the electrical connection between the external actuator and the driving part comprises at least one ground connection and two sensing signal connections.

The electrical connection between the external actuator and the driving part provides an effective excitation (or actuation energy) to the oscillation body of the internal actuator by virtue of a driving signal that is provided by the driving part. The driving signal excites resonant or near resonant oscillation (or eigen frequency) of the oscillation body of the internal actuator which enables the disclosed micromechanical resonator assembly to achieve extremely large scan angles that is 180° for one dimensional (1D) oscillation body with reduced power consumption. The ground connection completes the electrical connections of the micromechanical resonator assembly. The two sensing signal connections (e.g. a voltage and a current signal) are used to provide the actuation energy to the internal actuator.

According to the claims, the electrical connection between the external actuator and the driving part is obtained through wire bonding.

The wire bonding technique is used to internally connect the external actuator and the driving part. The wire bonding technique provides a cost effective solution to the micromechanical resonator assembly.

In a further implementation form, the external actuator is mounted on the mounting base by mechanical fixation such as clamping, or by gluing.

The mounting of the external actuator on the mounting base by use of the clamping (e.g. a screw fixation) provides a mechanical strength to the mount. Additionally, use of the clamping or gluing for mounting of the external actuator on the mounting base reduces the manufacturing cost of the micromechanical resonator assembly.

In a further implementation form, the electrical connection between the external actuator and the driving part is obtained through direct soldering of the external actuator onto the mounting base, so as to ensure both electrical connection and fixation of the external actuator on the mounting base.

By virtue of direct soldering of the external actuator onto the mounting base, the electrical connection between the external actuator and the driving part is obtained as well as fixation of the external actuator with the mounting base is achieved. This further results into robustness and easy handling of the micromechanical resonator assembly when in operation and low fabrication cost as well.

In a further implementation form, the internal actuator comprises an internal sensor electrically connected to the driving part, such as to allow reading out by the driving part of a position feedback signal of the oscillation body.

The reading out of the position feedback signal of the oscillation body by the driving part leads to a stable amplitude operation of the oscillation body.

In a further implementation form, wherein the electrical connection between the internal sensor and the driving part is obtained by wire bonding or flexible cable soldering.

The use of the wire bonding or flexible cable soldering for the electrical connection between the internal sensor and the driving part provides a flexibility to the micromechanical resonator assembly and reduces the manufacturing cost as well.

In a further implementation form, the internal actuator is mounted on the external actuator by gluing.

The mounting of the internal actuator on the external actuator by gluing results into the low fabrication cost.

In a further implementation form, the electrical connection between the internal sensor and the driving part is obtained by direct soldering of the internal sensor onto the external actuator, so as to ensure both electrical connection and fixation of the internal sensor on the external actuator.

The direct soldering of the internal sensor onto the external actuator provides the electrical connection between the internal sensor and the driving part and also the fixation of the internal sensor onto the external actuator. Additionally, the direct soldering provides the robustness to the micromechanical resonator assembly when in operation.

In a further implementation form, the external actuator comprises at least two ends and is mounted on the mounting base by one of said two ends, the internal actuator being mounted on the external actuator at the other one of said two ends.

The mounting of the external actuator on the mounting base at the one end and the mounting of the internal actuator on the external actuator at the other end provides robustness and compactness to the micromechanical resonator assembly.

In a further implementation form, the external actuator comprises at least two ends and is mounted on the mounting base by each of said two ends, the internal actuator being mounted on the external actuator between said two ends.

The mounting of the external actuator on the mounting base by use of both the ends provides robustness to the micromechanical resonator assembly. And mounting of the internal actuator between the two ends of the external actuator provides more robustness to the micromechanical resonator assembly and easy handling as well.

In a further implementation form, the external actuator has a circular shape and is mounted on the mounting base by a portion of its periphery, the internal actuator being mounted on the external actuator at the centre of said external actuator.

In an example, the external actuator has the circular shape. The mounting of the external actuator on the mounting base by the portion of its periphery provides robustness. And mounting of the internal actuator at the centre of the external actuator provides effective actuation energy to the oscillation body of the internal actuator.

In a further implementation form, the external actuator comprises an opening, the internal actuator comprising a mirror plate and being mounted on the external actuator so as to cover said opening on a first side of said external actuator, and so as to create an optical path from a light source, located on a second side opposite to said first side, to the mirror plate through said opening.

The optical path from the light source to the mirror plate through the opening provides reflection of light at a desired angle. Additionally, the internal actuator can be directly soldered onto the external actuator by use of the opening in the external actuator. The direct soldering of the internal actuator onto the external actuator provides the electrical connection with driving part as well as fixation of the internal actuator onto the external actuator

In a further implementation form, the micromechanical resonator assembly being a micro mirror scanner, the external actuator being a piezoelectric actuator and the internal actuator comprising a piezoelectric or electrostatic sensor.

In an example, the micromechanical resonator assembly is used as the micro-mirror scanner to provide a dynamic light modulation. The external actuator is used as the piezoelectric actuator and the internal actuator as the piezoelectric or electrostatic sensor in order to control a modulatory movement of a single mirror of the micro-mirror scanner for the dynamic light modulation.

In a further implementation form, the external piezoelectric actuator comprises at least one piezo electric layer and at least one passive layer, and is mounted on the mounting base through its passive layer.

The external piezoelectric actuator is used to actuate the internal actuator through the piezo electric layer and is mounted on the the mounting base through the passive layer in order to mitigate unwanted vibrations, if any.

In a further implementation form, the external piezoelectric actuator is segmented so as to comprise a plurality of segments each exhibiting different bending and torsion axis excitation frequency.

The plurality of segments of the external piezoelectric actuator exhibit different bending and torsion axis excitation frequency which further results into different polarization angles of the external actuator and different torsion oscillation modes.

In a further implementation form, the oscillation body of the internal actuator comprises a wafer-level vacuum encapsulated spring-mirror plate system.

The oscillation body of the internal actuator comprises the wafer-level vacuum encapsulated spring-mirror plate system in order to reduce an air damping effect while simultaneously results into a high quality factor (Q factor) of the micromechanical resonator assembly.

In another aspect, the present disclosure provides a light engine for laser scanning or laser projection system comprising the said micromechanical resonator assembly.

The light engine for laser scanning or laser projection system comprising the micromechanical resonator assembly achieves all the advantages and effects of the micromechanical resonator assembly of the present disclosure.

In an implementation form, laser projection or scanning system comprising said light engine, such as AR/VR glasses or helmet, or a Lidar system.

The laser projection or scanning system comprising the light engine finds application in augmented reality (AR) or virtual reality (VR) glasses or helmet, or the light detection and ranging (LiDAR) system, which provides extremely large scan angles that is from 110° to 180° and extrememly fast start-up time that is less than 1s. Additionally, the laser projection or scanning system comprising the light engine manifest low power consumption.

In a yet another aspect, the present disclosure provides a method of fabricating a micromechanical resonator assembly comprising an internal actuator which comprises an oscillation body configured to oscillate about one or more axis. The micromechanical resonator assembly further comprises an external actuator which comprises an oscillating part. The micromechanical resonator assembly further comprises a mounting base which comprises electronic driving part. The method further comprises mounting the internal actuator on the external actuator so as to form a coupled oscillating system. The method further comprises mounting the external actuator on the mounting base so as to electrically connect the external actuator to the electronic driving part, for allowing excitation of the oscillation body of the internal actuator by transfer of energy from the oscillating part to the oscillation body.

The present disclosure provides the method of fabricating the micromechanical resonator assembly which has an optimal actuation geometry of the internal actuator and the external actuator. Additionally, the method provides the specific mounting and assembly details of the micromechanical resonator assembly. Moreover, the micromechanical resonator assembly fabricated by use of the presented method achieves extremely large scan angles upto 180° and extrememly fast start-up time which is less than 1s with low power consumption.

In an implementation form, the electrical connection between the external actuator and the driving part is obtained through wire bonding.

The wire bonding technique is used to internally connect the external actuator and the driving part. The wire bonding technique provides a cost effective solution to the micromechanical resonator assembly

In a further implementation form, the external actuator is mounted on the mounting base by mechanical fixation such as clamping, or by gluing.

The use of clamping or gluing for mounting the external actuator on the mounting base reduces the manufacturing cost of the micromechanical resonator assembly.

In a further implementation form, the electrical connection between the external actuator and the driving part is obtained through direct soldering of the external actuator onto the mounting base, so as to ensure both electrical connection and fixation of the external actuator on the mounting base.

The direct soldering of the external actuator onto the mounting base results into robustness and easy handling of the micromechanical resonator assembly when in operation and low fabrication cost as well.

In a further implementation form, the internal actuator comprising an internal sensor. The method further comprises electrically connecting the internal sensor to the driving part, such as to allow reading out by the driving part of a position feedback signal of the oscillation body.

The reading out of the position feedback signal of the oscillation body by the driving part leads to a stable amplitude operation of the oscillation body.

In a further implementation form, the electrical connection between the internal sensor and the driving part is obtained by wire bonding or flexible cable soldering.

The use of the wire bonding or flexible cable soldering for the electrical connection between the internal sensor and the driving part provides reduces complexity to fabricate the micromechanical resonator assembly and reduces the manufacturing cost as well.

In a further implementation form, the internal actuator is mounted on the external actuator by gluing.

The mounting of the internal actuator on the external actuator by gluing reduces the fabrication cost of the micromechanical resonator assembly.

In a further implementation form, the electrical connection between the internal sensor and the driving part is obtained by direct soldering of the internal sensor onto the external actuator, so as to ensure both electrical connection and fixation of the internal sensor on the external actuator.

The direct soldering of the internal sensor onto the external actuator provides the electrical connection between the internal sensor and the driving part and also the fixation of the internal sensor on the external actuator. Additionally, the direct soldering provides the robustness to the micromechanical resonator assembly when in operation.

In a further implementation form, the method further comprises creating an opening in the external actuator prior to mounting the internal actuator on the external actuator, said internal actuator comprising a mirror plate, and mounting said internal actuator on the external actuator so as to cover said opening on a first side of said external actuator, such that an optical path is created from a light source, located on a second side opposite to said first side, to the mirror plate through said opening.

The method of creating the opening in the external actuator provides the optical path for transferring the light from the light source to the mirror plate which further results into reflection of the light at a desired reflection angle. Through the opening in the external actuator, the internal actuator can be directly soldered onto the external actuator.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A is a schematic side view of a micromechanical resonator assembly, in accordance with an embodiment of the present disclosure;
FIG. 1B is a schematic top view of the micromechanical resonator assembly of FIG. 1A, in accordance with an embodiment of the present disclosure;
FIG. 1C is a schematic side view of the micromechanical resonator assembly of FIG. 1A, in accordance with another embodiment of the present disclosure;
FIG. 1D is a schematic top view of the micromechanical resonator assembly of FIG. 1A, in accordance with another embodiment of the present disclosure;
FIG. 2 is a flowchart of a method of fabricating a micromechanical resonator assembly, in accordance with an embodiment of the present disclosure;
FIG. 3A is a schematic side view of a micromechanical resonator assembly, in accordance with another embodiment of the present disclosure;
FIG. 3B is a schematic side view of a micromechanical resonator assembly, in accordance with yet another embodiment of the present disclosure;
FIG. 3C is a schematic side view of a micromechanical resonator assembly, in accordance with yet another embodiment of the present disclosure;
FIG. 3D is a schematic side view of a micromechanical resonator assembly, in accordance with yet another embodiment of the present disclosure;
FIG. 3E is a schematic top view of the micromechanical resonator assembly of FIG. 3D, in accordance with an embodiment of the present disclosure;
FIG. 4 is a flowchart of a method that depicts fabrication details of a micromechanical resonator assembly, in accordance with an embodiment of the present disclosure;
FIG. 5 is a schematic top view of a micromechanical resonator assembly, in accordance with another embodiment of the present disclosure;
FIG. 6 is a schematic top view of a micromechanical resonator assembly, in accordance with yet another embodiment of the present disclosure; and
FIG. 7 is an illustration of an exemplary implementation of a micromechanical resonator assembly in a laser scanning or laser projection system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

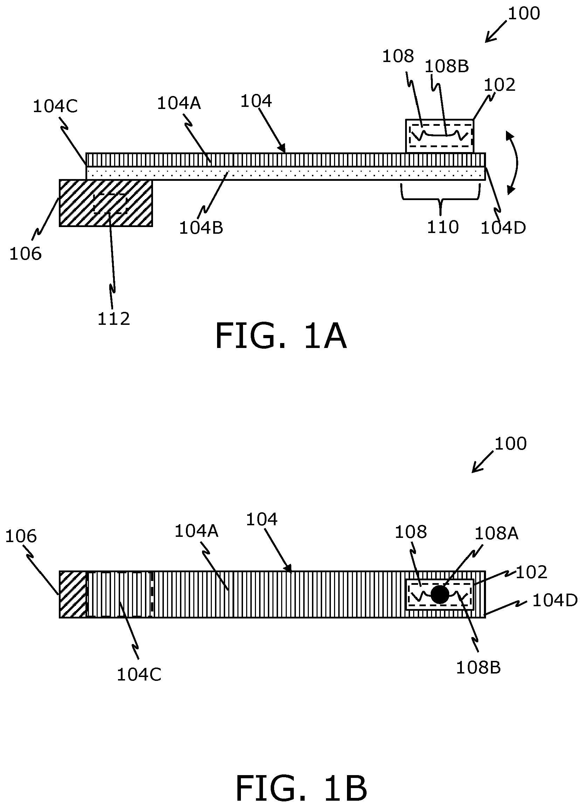

FIG. 1A is a schematic side view of a micromechanical resonator assembly, in accordance with an embodiment of the present disclosure. With reference to FIG. 1A, there is shown a micromechanical resonator assembly **100** that comprises an internal actuator **102,** an external actuator **104,** and a mounting base **106.** The internal actuator **102** comprises an oscillation body **108.** The oscillation body **108** includes a micro mirror plate **108A** and a spring **108B.** The external actuator **104** comprises a piezoelectric layer **104A,** a passive layer **104B,** a first end **104C,** a second end **104D** and an oscillating part **110.** The mounting base **106** comprises an electronic driving part **112.** The oscillation body **108** is represented by a dashed rectangular box which is used for illustration purpose only and does not form a part of circuitry.

The micromechanical resonator assembly **100** is an improved micro-electro-mechanical system (MEMS) device that provides extremely large scan angles from 110° to 180° for one dimensional (1D) oscillation body such as the oscillation body **108.** The micromechanical resonator assembly **100** provides external actuation of the oscillation body **108** of the internal actuator **102** by use of the external actuator **104** and hence, manifests high actuation energy in comparison to a conventional micromechanical resonator. The micromechanical resonator assembly **100** is used in light projection systems. Examples of such light projection systems include, but is not limited to a laser projection system, a laser scanning system, light detection and ranging (LiDAR) system, Augmented Reality (AR) and Virtual Reality (VR) based glasses, helmets, and the like.

The internal actuator **102** is configured for energy conversion such as electrical, air or hydraulic energy into a mechanical energy such as a mechanical movement or vice-versa. The internal actuator **102** may also be referred as a micro mirror chip which includes a mirror plate (or an array of mirror plates). In an implementation, the internal actuator **102** may include either a piezoelectric sensor, or an electrostatic sensor or actuator elements. The internal actuator **102** comprises the oscillation body **108.** The micro mirror plate **108A** (not visible in FIG. 1A) mounted on the spring **108B** collectively consitutes the oscillation body **108.** The oscillation body **108** may also be referred as MEMS mirrors or MEMS mirror arrays of the internal actuator **102.**

The oscillation body **108** (i.e. the micro mirror plate **108A** mounted on the spring **108B)** of the internal actuator **102** is configured to oscillate about one or more axis hence, the oscillation body **108** has one or more eigen frequencies. Generally, an eigen frequency is defined as a frequency at which an oscillation system such as the oscillation body **108,** tends to oscillate in absence of any driving force or a damping force. Therefore, the eigen frequency is also referred as a natural frequency or a resonant frequency.

The external actuator **104** is configured to provide an actuation energy to the oscillation body **108** (i.e. the micro mirror plate **108A** mounted on the spring **108B)** of the internal actuator **102.** The oscillating part **110** of the external actuator **104** is configured to perform a bending mode vibration on applying a drive signal (e.g. a voltage signal or a current signal) through the piezoelectric layer **104A** of the external actuator **104.** The bending mode vibration of the oscillating part **110** transfers an actuation energy to the oscillation body **108** (i.e. the micro mirror plate **108A** mounted on the spring **108B).** The actuation energy tends the oscillation body **108** to oscillate about its axis. The external actuator **104** transfers the actuation energy to the oscillation body **108** by use of the piezoelectric layer **104A.** The external actuator **104** may also be referred as an external piezoelectric actuator. In this embodiment, the external actuator **104** has a rectangular shape, however, in another embodiment, the external actuator **104** may have a different shape such as circular, elliptical or trapezoidal.

The mounting base **106** comprises the electronic driving part **112** which is configured to drive and read out the internal actuator **102** and the external actuator **104** of the micromechanical resonator assembly **100.** In an implementation, the mounting base **106** may also be referred as a mounting printed circuit board (PCB). The electronic driving part **112** may also be referred as an electronic component or a combnation of electronic components such as amplifiers, capacitors and the like.

In operation, the internal actuator **102** is mounted with the external actuator **104** so as to form a coupled oscillation system. The external actuator **104** is mounted on the mounting base **106** and is electrically connected to the electronic driving part **112,** for allowing excitation of the oscillation body **108** of the internal actuator **102** by transfer of energy from the oscillating part **110** to the oscillation body **108.** The external actuator **104** is electrically connected to the electronic driving part **112.** Therefore, on applying an amplitude changing drive signal frequency (e.g. a sinusoidal signal) to the piezoelectric layer **104A** of the external actuator **104,** the oscillating part **110** performs a bending mode vibration which is indicated by a double sided arrow. The bending mode vibration of the oscillating part **110** transfers an actuation energy to the oscillation body **108** (i.e. the micro mirror plate **108A** mounted on the spring **108B).** The actuation energy causes the oscillation body **108** to oscillate about its axis. In this way, the oscillating part **110** of the external actuator **104** and the oscillation body **108** of the internal actuator **102** are configured to form the coupled oscillation system. The actuation energy transferred by the oscillating part **110** excites the one or more eigen (or resonant or near resonant) frequencies of the oscillation body **108** and effective enough to lead the oscillation body **108** to have extremely large scan angles of upto 180°.

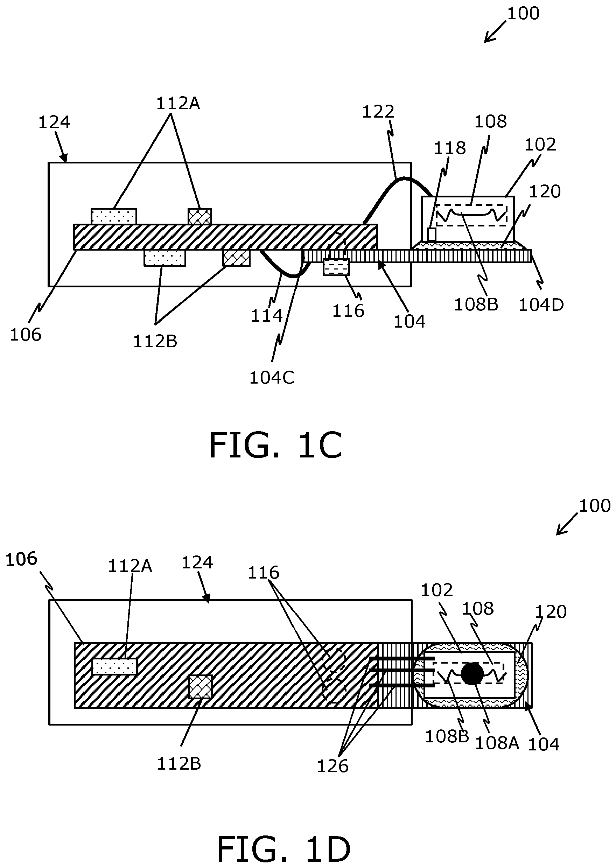

In accordance with an embodiment, the electrical connection between the external actuator **104** and the driving part **112** comprises at least one ground connection and two sensing signal connections. The external actuator **104** is electrically connected to the electronic driving part **112** of the mounting base **106.** The electrical connection includes one ground connection in order to complete the electrical connections of the micromechanical resonator assembly **100** and to set a reference for measurement of any voltage or current in the micromechanical resonator assembly **100.** The two sensing signal connections, for example a voltage and a current signal, are used in order to apply actuation voltage or current to the external actuator **104** which is further used to excite the eigen frequency (i.e. resonant or near resonant frequency) of the oscillation body **108** of the internal actuator **102.** The electrical connections of the internal actuator **102** and the external actuator **104** with the electronic driving part **112** are described in detail, for example, in FIG. 1C.

In accordance with an embodiment, the external actuator **104** comprises at least two ends and is mounted on the mounting base **106** by one of said two ends, the internal actuator **102** being mounted on the external actuator **104** at the other one of said two ends. In this embodiment, the external actuator **104** has the rectangular shape and includes two ends such as the first end **104C** and the second end **104D.** The external actuator **104** is mounted on the mounting base **106** at the first end **104C** and the internal actuator **102** is mounted on the external actuator **104** at the second end **104D.** Such arrangement of the internal actuator **102,** the external actuator **104** and the mounting base **106** by use of the first end **104C** and the second end **104D** may also be referred as a one-sided (or single-sided) clamped external actuator and is described in detail, for example, in FIG. 1B.

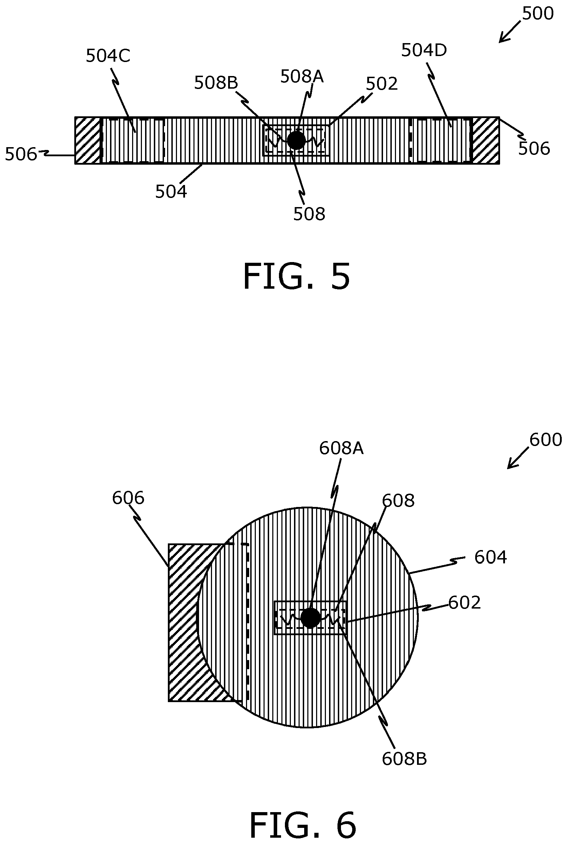

In accordance with an embodiment, the external actuator **104** comprises at least two ends and is mounted on the mounting base **106** by each of said two ends, the internal actuator **102** being mounted on the external actuator **104** between said two ends. In an implementation, the external actuator **104** is mounted on the mounting base **106** by use of both the ends such as the first end **104C** and the second end **104D.** And the internal actuator **102** is mounted between the first end **104C** and the second end **104D,** that may be at centre or near to centre of the external actuator **104.** The arrangement of the internal actuator **102** between the two ends (i.e. the first end **104C** and the second end **104D)** of the external actuator **104** may also be referred as a two-sided (or double sided) clamped external actuator and is described in detail, for example, in FIG. 5.

In accordance with an embodiment, the external actuator **104** has a circular shape and is mounted on the mounting base **106** by a portion of its periphery, the internal actuator **102** being mounted on the external actuator **104** at the centre of said external actuator **104.** In another embodiment, the external actuator **104** has the circular shape. The mounting of the external actuator **104** on the mounting base **106** is performed by use of the portion of its periphery. The internal actuator **102** is mounted at the centre the external actuator **104.** An exemplary implementation of the external actuator **104** having the circular shape is described in detail, for example, in FIG. 6.

In accordance with an embodiment, the micromechanical resonator assembly **100** being a micro mirror scanner, the external actuator **104** being a piezoelectric actuator and the internal actuator **102** comprising a piezoelectric or electrostatic sensor. The micromechanical resonator assembly **100** is a micro mirror scanner which is used to project a light (e.g. a laser light) at a certain angle. The external actuator **104** is a piezoelectric actuator which is used to induce mechanical movement (such as the bending mode vibration of the oscillating part **110)** by use of the electrical energy (which is applied in the form of the voltage and the current signals as sensing signals). The internal actuator **102** comprises the piezoelectric or electrostatic sensor to provide the actuation energy (i.e. either electrical or mechanical energy) to the oscillation body **108** to make it oscillate about its axis.

In accordance with an embodiment, the external piezoelectric actuator **104** comprises at least one piezo electric layer **104A** and at least one passive layer **104B,** and is mounted on the mounting base **106** through its passive layer **104B.** The external piezoelectric actuator **104** is mounted on the mounting base **106** through the passive layer **104B** to avoid any unwanted vibration. The internal actuator **102** is mounted on the external actuator **104** through the piezoelectric layer **104A** which is used to transfer the actuation energy (i.e. either electrical or mechanical energy) to the oscillation body **108** of the internal actuator **102.** By virtue of the piezoelectric layer **104A** and the passive layer **104B,** the external actuator **104** forms a bi-morph structure. In another embodiment, the external actuator **104** may include either three layers or a plurality of layers and hence, form a tri-morph structure or a multilayered structure, respectively.

In accordance with an embodiment, the external piezoelectric actuator **104** is segmented so as to comprise a plurality of segments each exhibiting different bending and torsion axis excitation frequency. In another embodiment, the external piezoelectric actuator **104** comprises the plurality of segments. The plurality of segments exhibit different polarization angles with respect to each other such as in-plane, out-of plane, or 45° polarization angle which further leads to different bending and torsion oscillation modes (or excitation frequency).

In accordance with an embodiment, the oscillation body **108** of the internal actuator **102** comprises a wafer-level vacuum encapsulated spring-mirror plate system. The oscillation body **108** of the internal actuator **102** includes the micro mirror plate **108A** which is mounted on the spring **108B.** The micro mirror plate **108A** belongs to the wafer-level packaging technique so as to reduce the air damping effects. Alternatively stated, the micro mirror plate **108A** belongs to the wafer-level vaccum encapsulated spring-mirror plate system. The wafer-level vaccum encapsulated spring-mirror plate system results into high quality factor (Q factor) of the micromechanical resonator assembly **100.**

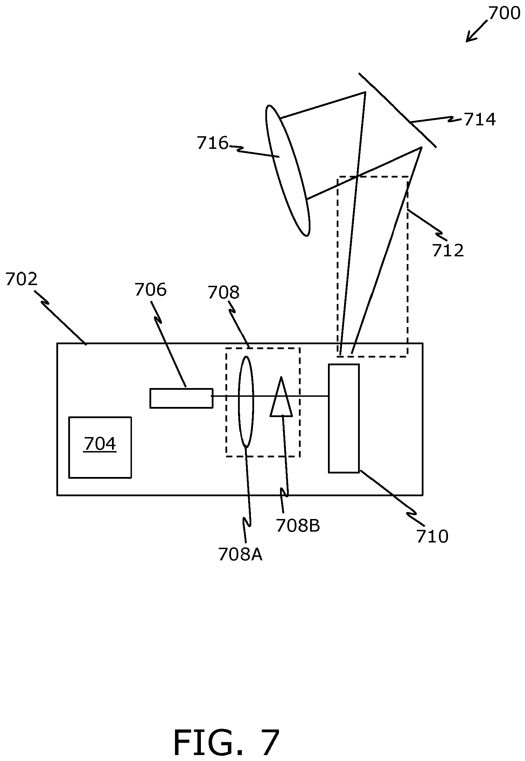

In accordance with an embodiment, the micromechanical resonator assembly **100** is used in a light engine for laser scanning or laser projection system. An exemplary implementation of the micromechanical resonator assembly **100** in the light engine for laser scanning or laser projection system is described in detail, for example, in FIG. 7.

In accordance with an embodiment, a laser projection or scanning system comprising the aforesaid light engine, such as AR/VR glasses or helmet, or a Lidar system. Examples of the laser projection or scanning system comprising the light engine include augmented reality (AR) or virtual reality (VR) glasses or helmets, light detection and ranging (LiDAR) system and the like. The light engine comprises the micromechanical resonator assembly **100** in order to project light at a certain angle on requirement basis. These systems provide extremely large scan angles up to 180° and extrememly fast start-up time that is less than 1s. Additionally, the laser projection or scanning system comprising the light engine operates at a low power consumption and has a robust quality.

FIG. 1B is a schematic top view of the micromechanical resonator assembly of FIG. 1A, in accordance with an embodiment of the present disclosure. FIG. 1B is described in conjunction with elements from FIG. 1A. With reference to FIG. 1B, there is shown a top view of the micromechanical resonator assembly **100** of FIG. 1A. In the top view, the micromechanical resonator assembly **100** appears to have a rectangular shape and a one-sided clamping of the external actuator **104.** In the one-sided (or single-sided) clamping of the external actuator **104,** the external actuator **104** is mounted on the mounting base **106** at the first end **104C** and the internal actuator **102** is mounted on the external actuator **104** at the second end **104D.** The micro mirror plate **108A** of the oscillation body **108** appears to have a circular shape in the top view of the micromechanical resonator assembly **100.**

FIG. 1C is a schematic side view of the micromechanical resonator assembly of FIG. 1A, in accordance with an embodiment of the present disclosure. FIG. 1C is described in conjunction with elements from FIGs. 1A and 1B. With reference to FIG. 1C, there is shown a side view of the micromechanical resonator assembly **100** of FIG. 1A. In the side view, the micromechanical resonator assembly **100** further includes a first wire **114,** a screw **116,** an internal sensor **118,** a glue **120,** a second wire **122** and a housing **124.** There is further shown that the electronic driving part **112** of the mounting base **106** includes electronic components **112A** and **112B.**

The internal sensor **118** is configured to measure a change in a voltage, or current or any other physical quantity. The housing **124** protects the mounting base **106** and the electronic driving part **112** from dust particles. The housing **124** may be made of an insulating material, such as plastic.

In accordance with the claims, the electrical connection between the external actuator **104** and the driving part **112** is obtained through wire bonding. In this embodiment, the external actuator **104** is electrically connected to the driving part **112** through the first wire **114** by use of the wire bonding technique. The external actuator **104** is electrically connected to the driving part **112** so that an actuation voltage or current signal can be applied to the external actuator **104** in order to excite the one or more eigen frequencies of the oscillation body **108** of the internal actuator **102.** The electronic components **112A** and **112B** of the driving part **112** are configured to provide the actuation voltage or current signal to the external actuator **104** in order to drive the external actuator **104** and read out the internal actuator **102** of the micromechanical resonator assembly **100.** The electronic components **112A** and **112B** may include amplifiers, capacitors and the like. In another embodiment not according to the claims, a soldered wire may also be used to electrically connect the external actuator **104** to the driving part **112.**

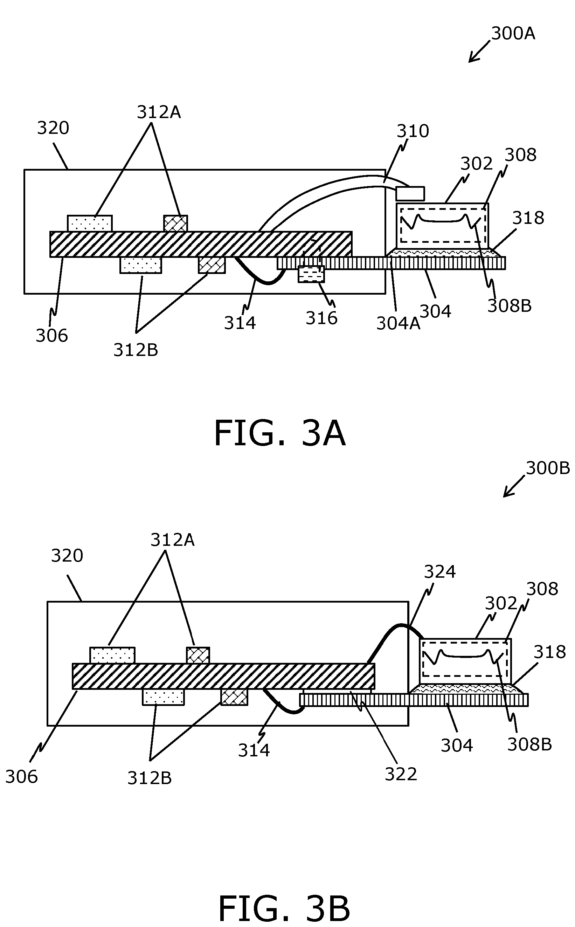

In accordance with an embodiment, the external actuator **104** is mounted on the mounting base **106** by mechanical fixation such as clamping, or by gluing. In this embodiment, the external actuator **104** is mounted on the mounting base **106** by use of the screw **116.** The screw **116** provides a mechanical strength to the external actuator **104** and the mounting base **106** as well. In another embodiment, the external actuator **104** is mounted on the mounting base **106** by use of the gluing. An exemplary implementation of a glued external actuator is described in detail, for example, in FIG. 3B.

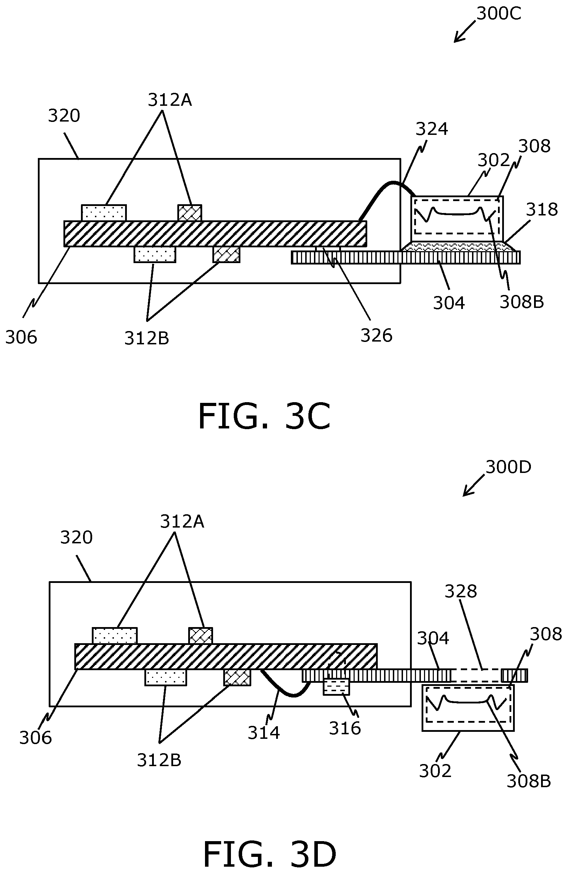

In accordance with an embodiment, the electrical connection between the external actuator **104** and the driving part **112** is obtained through direct soldering of the external actuator **104** onto the mounting base **106,** so as to ensure both electrical connection and fixation of the external actuator **104** on the mounting base **106.** The direct soldering of the external actuator **104** onto the mounting base **106** provides the electrical connection between the external actuator **104** and the driving part **112** so that an actuation voltage or current signal can be easily applied to the external actuator **104.** Additionally, the direct soldering provides the fixation of the external actuator **104** on the mounting base **106.** An exemplary implementation of the direct soldering of the external actuator **104** onto the mounting base **106** is described in detail, for example, in FIG. 3C.

In accordance with an embodiment, the internal actuator **102** comprises the internal sensor **118** electrically connected to the driving part **112,** such as to allow reading out by the driving part **112** of a position feedback signal of the oscillation body **108.** For a stable amplitude operation of the oscillation body **108** of the internal actuator **102,** the external actuator **104** is driven in a closed loop by use of the internal sensor **118.** The internal sensor **118** allows the driving part **112** to read out the position feedback signal of the oscillation body **108.** The postion feedback signal of the oscillation body **108** is applied to the closed loop which enables the external actuator **104** to control oscillations of the oscillation body **108** and results into the stable amplitude operation of the oscillation body **108.**

In accordance with an embodiment, the electrical connection between the internal sensor **118** and the driving part **112** is obtained by wire bonding or flexible cable soldering. In this embodiment, the internal sensor **118** is electrically connected to the driving part **112** through the second wire **122** by use of the wire bonding technique. In another embodiment, the internal sensor **118** is electrically connected to the driving part **112** through the flexible cable soldering. An exemplary implementation of the flexible cable soldering for the electrical conection between the internal sensor **118** and the driving part **112** is described in detail, for example, in FIG. 3A.

In accordance with an embodiment, the internal actuator **102** is mounted on the external actuator **104** by gluing. The internal actuator **102** (or micro mirror chip) is mounted on the external actuator **104** by use of the glue **120.** The glue **120** provides thermal insensitivity to the micromechanical resonator assembly **100.** In another embodiment, the internal actuator **102** (or micro mirror chip) may be mounted on the external actuator **104** by use of soldering.

In accordance with an embodiment, electrical connection between the internal sensor **118** and the driving part **112** is obtained by direct soldering of the internal sensor **118** onto the external actuator **104,** so as to ensure both electrical connection and fixation of the internal sensor **118** on the external actuator **104.** The internal sensor **118** is mounted on the external actuator **104** by use of the direct soldering which provides the electrical connection between the internal sensor **118** and the driving part **112** and mechanical fixation of the the internal sensor **118** on the external actuator **104** as well.

In accordance with an embodiment, the external actuator **104** comprises an opening, the internal actuator **102** comprising the mirror plate **108A** and being mounted on the external actuator **104** so as to cover said opening on a first side of said external actuator **104,** and so as to create an optical path from a light source, located on a second side opposite to said first side, to the mirror plate **108A** through said opening. The internal actuator **102** is directly soldered onto the external actuator **104** for electrical as well as mechanical connection through the opening in the external actuator **104.** An exemplary implementation of direct soldering of the internal actuator **102** onto the external actuator **104** through the opening in the external actuator **104** is described in detail, for example, in FIG. 3D.

FIG. 1D is a schematic top view of the micromechanical resonator assembly of FIG. 1A, in accordance with an embodiment of the present disclosure. FIG. 1D is described in conjunction with elements from FIGs. 1A, 1B, and 1C. With reference to FIG. 1D, there is shown a top view of the micromechanical resonator assembly **100** of FIG. 1A. In the top view, the micromechanical resonator assembly **100** appears to have a rectangular shape. There is further shown a wire bond **126** which is configured to provide the electrical connections to the internal actuator **102** and the external actuator **104** from the driving part **112.** The internal sensor **118** of the internal actuator **102** is electrically connected to the driving part **112** through the second wire **122** and the external actuator **104** is electrically connected to the driving part **112** through the first wire **114** (shown in FIG. 1C). The first wire **114** and the second wire **122** collectively represent the wire bond **126.** The screw **116** (also represented as dotted circular hole) represents the mechanical fixation of the external actuator **104** on the mounting base **106.** The top view of the micromechanical resonator assembly **100** also represents the glued internal actuator **102** which is mounted on the external actuator **104.**

Thus, the micromechanical resonator assembly **100** provides an effective actuation energy to the oscillation body **108** (i.e. the micro mirror plate **108A** mounted on the spring **108B)** of the internal actuator **102** by use of the external actuator **104.** The external actuator **104** excites the one or more eigen frequencies (i.e. resonant or near resonant frequencies) of the oscillation body **108** by virtue of the driving signal which is provided by the driving part **112.** The driving signal (i.e. sine wave) causes the bending mode vibration of the oscillating part **110** of the external actuator **104** which further transfers the effective actuation energy to the oscillation body **108** of the internal actuator **102.** Due to the effective actuation energy, the micro mirror plate **108A** of the oscillation body **108** oscillates about its axis and achieves the extremely large scan angles upto 180°. Thus, the micromechanical resonator assembly **100** provides extremely large scan angles up to 180° for one dimensional (1D) oscillation body because of the transfer of high actuation energy to the oscillation body **108.** The micromechanical resonator assembly **100** provides extrememly fast start-up time that is less than 1s in comparison to the conventional micromechanical resonator assembly. Moreover, the micromechanical resonator assembly **100** is manufacturable at high volume because of the use of semiconductor assembly process. The micromechanical resonator assembly **100** is cost efficient and has robust quality. Additionally, the micromechanical resonator assembly **100** provides a reduced power consumption and easy handling when in operation. The micromechanical resonator assembly **100** may also be referred as a micro-mirror assembly, a micro-mirror external piezo system, or a MEMS mirror assembly. The micromechanical resonator assembly **100** is used in laser projection or laser scanning system such as augmented reality (AR) or virtual reality (VR) glasses or helmets, light detection and ranging (LiDAR) system and the like.

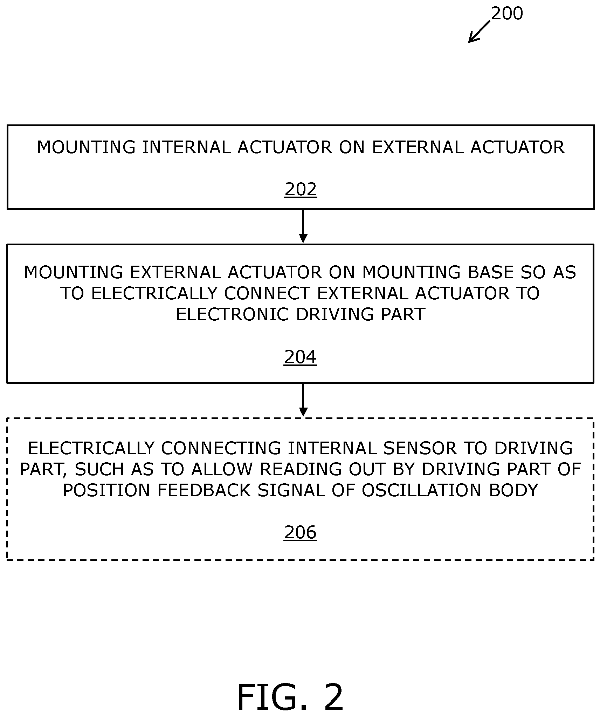

FIG. 2 is a flowchart of a method of fabricating a micromechanical resonator assembly, in accordance with an embodiment of the present disclosure. FIG. 2 is described in conjunction with elements from FIGs. 1A, 1B, 1C, and 1D. With reference to FIG. 2, there is shown a method **200** of fabricating a micromechanical resonator assembly such as the micromechanical resonator assembly **100** of FIG. 1A. The method **200** is executed, for example, by the micromechanical resonator assembly **100** (of FIG. 1A). The method **200** includes steps **202** to **206.**

At step **202,** the method **200** comprises mounting an internal actuator (such as the internal actuator **102)** on an external actuator (such as the external actuator **104)** so as to form a coupled oscillating system. The micromechanical resonator assembly **100** includes the internal actuator **102** and the exernal actuator **104.** The internal actuator **102** is mounted on the external actuator **104** either by gluing or direct soldering. The external actuator **104** provides an actuation energy to the internal actuator **102** which tends the internal actuator **102** to oscillate about its axis. In this way, the internal actuator **102** and the external actuator **104** collectively form the coupled oscillating system. The internal actuator **102** may also be referred as a micro mirror chip with spring mounted mirror plate. The external actuator **104** may also be referred as an external piezo actuator.

In accordance with an embodiment, the internal actuator **102** comprises an internal sensor (such as the internal sensor **118).** The internal sensor **118** is used in a case where stable amplitude operation of the oscillation body **108** is required.

At step **204,** the method **200** further comprises mounting the external actuator **104** on a mounting base (such as the mounting base **106)** so as to electrically connect the external actuator **104** to an electronic driving part (such as the electronic driving part **112),** for allowing excitation of an oscillation body (such as the oscillation body **108)** of the internal actuator **102** by transfer of energy from an oscillating part (such as the oscillating part **110)** to the oscillation body **108.** The electrical connection between the external actuator **104** and the driving part **112** provides a driving signal (e.g. a sine wave that is an amplitude changing drive signal with a selected frequency) to the external actuator **104.** The oscillating part **110** of the external actuator **104** performs a bending mode vibration because of the driving signal (i.e. sine wave). The bending mode vibration of the oscillating part **110** transfers an actuation energy to the oscillation body **108.** The actuation energy excites the one or more eigen frequencies of the oscillation body **108** and tends it to oscillate about its axis.

In accordance with an embodiment, the external actuator **104** is mounted on the mounting base **106** by mechanical fixation such as clamping, or by gluing. The external actuator **104** is mounted on the mounting base **106** either by clamping, for example, by use of the screw **116** (as shown in FIG. 1C) or by gluing.

In accordance with the claims, the electrical connection between the external actuator **104** and the driving part **112** is obtained through wire bonding. For example, the external actuator **104** is electrically connected to the driving part **112** by use of the first wire **114** (as shown in FIG. 1C) under the wire bonding technique. The use of the wire bonding technique results into low cost of the micromechanical resonator assembly **100.**

In accordance with an embodiment not according to the claims, alternatively, the electrical connection between the external actuator **104** and the driving part **112** is obtained through direct soldering of the external actuator **104** onto the mounting base **106,** so as to ensure both electrical connection and fixation of the external actuator **104** on the mounting base **106.** The direct soldering of the external actuator **104** onto the mounting base **106** provides the electrical connection between the external actuator **104** and the driving part **112** as well as fixation of the external actuator **104** onto the mounting base **106.** The direct soldering of the external actuator **104** onto the mounting base **106** provides robustness to the micromechanical resonator assembly **100.**

In an embodiment, at step **206,** the method **200** further comprises electrically connecting the internal sensor **118** to the driving part **112,** such as to allow reading out by the driving part **112** of a position feedback signal of the oscillation body **108.** For a stable amplitude operation of the oscillation body **108** of the internal actuator **102,** the external actuator **104** is driven in a closed loop by use of the internal sensor **118.** The internal sensor **118** allows the driving part **112** to read out the position feedback signal of the oscillation body **108.** The postion feedback signal of the oscillation body **108** is applied to the closed loop which enables the external actuator **104** to control oscillations of the oscillation body **108** and results into the stable amplitude operation of the oscillation body **108.**

In accordance with an embodiment, the electrical connection between the internal sensor **118** and the driving part **112** is obtained by wire bonding or flexible cable soldering. For example, the internal sensor **118** is electrically connected to the driving part **112** by use of the second wire **122** (as shown in FIG. 1C) under wire bonding technique. Aluminium (Al) or gold (Au) wires are used to electrically connect the bond pads of internal actuator **102** (or the micro mirror chip) to the bonning pads of the mounting base **106.** Optionally, the flexible cable soldering is also used for the electrical connection between the internal sensor **118** and the driving part **112.**

In accordance with an embodiment, the internal actuator **102** is mounted on the external actuator **104** by gluing. The internal actuator **102** (or the micro mirror chip) is mouned on the external actuator **104** by use of the glue **120** (shown in FIG. 1C).

In accordance with an embodiment, the electrical connection between the internal sensor **118** and the driving part **112** is obtained by direct soldering of the internal sensor **118** onto the external actuator **104,** so as to ensure both electrical connection and fixation of the internal sensor **118** on the external actuator **104.** The soldering conductor wires are used for direct soldering of the internal sensor **118** onto the external actuator **104.**

In accordance with an embodiment, the method **200** further comprises creating an opening in the external actuator **104** prior to mounting the internal actuator **102** on the external actuator **104,** the internal actuator **102** comprising a mirror plate (such as the micro mirror plate **108A),** and mounting the internal actuator **102** on the external actuator **104** so as to cover said opening on a first side of the external actuator **104,** such that an optical path is created from a light source, located on a second side opposite to said first side, to the mirror plate (such as the micro mirror plate **108A)** through said opening. Optionally, for direct soldering of the internal actuator **102** (or the micro mirror chip) onto the external actuator **104** (or external piezo actuator), the opening is created in the external actuator **104** prior to mounting of the internal actuator **102** on the external actuator **104.** The created optical path from the light source to the mirror plate (such as the micro mirror plate **108A** of the oscillation body **108)** provides reflection of light at a required angle which is used in laser sanning or laser projection systems.

The steps **202** to **206** are only illustrative and other alternatives can also be provided where one or more steps are added, one or more steps are removed, or one or more steps are provided in a different sequence without departing from the scope of the claims herein.

FIG. 3A is a schematic side view of a micromechanical resonator assembly, in accordance with another embodiment of the present disclosure. FIG. 3A is described in conjunction with elements from FIGs. 1A, 1B, 1C, and 1D. With reference to FIG. 3A, there is shown a micromechanical resonator assembly **300A.** The micromechanical resonator assembly **300A** includes an internal actuator **302,** an external actuator **304** and a mounting base **306.** The internal actuator **302** includes an oscillation body **308** which further includes a micro mirror plate **308A** (not visible here) mounted on a spring **308B.** The external actuator **304** includes a piezoelectric layer **304A.** The mounting base **306** includes electronic components **312A** and **312B** which constitute a driving part (such as the driving part **112** of FIG. 1A) of the mounting base **306.** There is further shown a flexible cable **310,** a wire **314,** a screw **316,** a glue **318** and a housing **320.**

The internal actuator **302,** the external actuator **304** and the mounting base **306** correspond to the internal actuator **102,** the external actuator **104** and the mounting base **106,** respectively, of the micromechanical resonator assembly **100.** Moreover, the piezoelectric layer **304A** of the external actuator **304,** the oscillation body **308** with the micro mirror plate **308A** and the spring **308B,** and the electronic components **312A** and **312B** which constitute the driving part of the mounting base **306** correspond to the piezoelectric layer **104A** of the external actuator **104,** the oscillation body **108** with the micro mirror plate **108A** and the spring **108B,** and the electronic components **112A** and **112B** which constitute the driving part **112** of the mounting base **106,** respectively, of the micromechanical resonator assembly **100** (shown in FIG. 1C). The wire **314,** the screw **316,** the glue **318** and the housing **320** correspond to the first wire **114,** the screw **116,** the glue **120** and the housing **124,** respectively, of the micromechanical resonator assembly **100** (shown in FIG. 1C).

Alternatively stated, electrical and mechanical connections of the micromechanical resonator assembly **300A** correspond to the electrical and mechanical connections of the micromechanical resonator assembly **100** (of FIG. 1C) except a difference. The difference is that the internal actuator **302** (or the micro mirror chip) is electrically connected to the driving part of the mounting base **306** by use of the flexible cable **310** instead of the wire bonding (shown in FIG. 1C). The flexible cable **310** is used to provide the electrical connection between the internal actuator **302** and the driving part of the mounting base **306.** The flexible cable **310** provides a flexibility to the micromechanical resonator assembly **300A.** The flexible cable **310** may also be referred to as a flex cable.

FIG. 3B is a schematic side view of a micromechanical resonator assembly, in accordance with yet another embodiment of the present disclosure. FIG. 3B is described in conjunction with elements from FIGs. 1A, 1B, 1C, 1D. and 3A. With reference to FIG. 3B, there is shown a micromechanical resonator assembly **300B.** The micromechanical resonator assembly **300B** includes a glue **322** and a wire **324.**

The electrical and mechanical connections of the micromechanical resonator assembly **300B** correspond to the electrical and mechanical connections of the micromechanical resonator assembly **300A** (of FIG. 3A) except a few differences. The differences are that in the micromechanical resonator assembly **300B,** the external actuator **304** is mounted onto the mounting base **306** by use of the glue **322** instead of clamping the external actuator **304** onto the mounting base **306** by use of the screw **316** in the micromechanical resonator assembly **300A** (of FIG. 3A). Additionally, the internal actuator **302** (or the micro mirror chip) is electrically connected to the driving part (such as the driving part **112** of FIG. 1A) of the mounting base **306** by use of the wire **324** through wire bonding inspite of soldering the flexible cable **310** as shown in the micromechanical resonator assembly **300A.**

FIG. 3C is a schematic side view of a micromechanical resonator assembly, in accordance with yet another embodiment of the present disclosure. FIG. 3C is described in conjunction with elements from FIGs. 1A, 1B, 1C, 1D, 3A, and 3B. With reference to FIG. 3C, there is shown a micromechanical resonator assembly **300C.**

The micromechanical resonator assembly **300C** corresponds to the micromechanical resonator assembly **300B** (of FIG. 3B) except a difference. The difference is that in the micromechanical resonator assembly **300C,** the external actuator **304** is mounted onto the mounting base **306** by direct soldering **326** (instead of using glue or mechanical fixation, such as a screw). The direct soldering **326** of the external actuator **304** onto the mounting base **306** provides the electrical connection between the external actuator **304** and the driving part of the mounting base **306** as well as the mechanical fixation of the external actuator **304** onto the mounting base **306.**

FIG. 3D is a schematic side view of a micromechanical resonator assembly, in accordance with yet another embodiment of the present disclosure. FIG. 3D is described in conjunction with elements from FIGs. 1A, 1B, 1C, 1D, 3A, 3B, and 3C. With reference to FIG. 3D, there is shown a micromechanical resonator assembly **300D.** In the micromechanical resonator assembly **300D,** the external actuator **304** comprises an opening **328.**

The micromechanical resonator assembly **300D** corresponds to the micromechanical resonator assembly **300A** (of FIG. 3A) except a difference. The difference is that in the micromechanical resonator assembly **300D,** the internal actuator **302** is directly soldered onto the external actuator **304** through the opening **328** instead of using the glue **318** for mounting as shown in FIGs. 3A, 3B and 3C. The direct soldering of the internal actuator **302** onto the external actuator **304** provides the electrical connection between the internal actuator **302** and the driving part of the mounting base **306** as well as mechanical fixation of the internal actuator **302** onto the external actuator **304.** Additionally, the opening **328** of the external actuator **304** provides an optical path from a light source to the mirror plate **308A** of the oscillation body **308** in order to project the light at a certain angle.

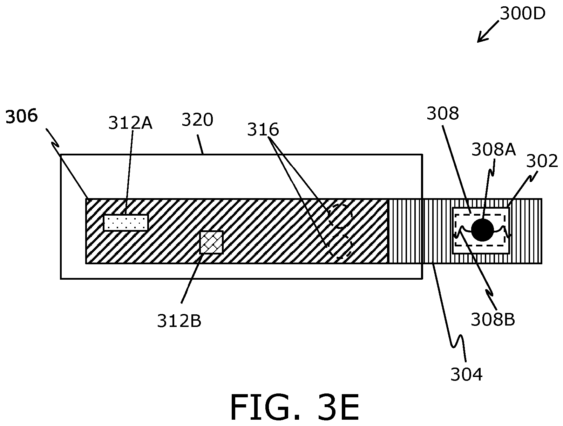

FIG. 3E is a schematic top view of the micromechanical resonator assembly **300D** of FIG. 3D, in accordance with an embodiment of the present disclosure. FIG. 3E is described in conjunction with elements from FIGs. 1A, 1B, 1C, 1D, 3A, 3B, 3C, and 3D. With reference to FIG. 3E, there is shown a top view of the micromechanical resonator assembly **300D** of FIG. 3D.

The top view of the micromechanical resonator assembly **300D** corresponds to the top view of the micromechanical resonator assembly **100** (of FIG. 1D) except a few differences. The differences are that in the micromechanical resonator assembly **300D,** the internal actuator **302** is directly soldered onto the external actuator **304** through the opening **328** of the external actuator **304.** The direct soldering of the internal actuator **302** onto the external actuator **304** provides the electrical connection between the internal actuator **302** and the driving part of the mounting base **306** and hence, the direct soldering is used as an alternative of the wire bond **126** used in the micromechanical resonator assembly **100** (of FIG. 1D). Moreover, the direct soldering of the internal actuator **302** onto the external actuator **304** provides mechanical fixation of the internal actuator **302** onto the external actuator **304** and hence, the direct soldering is used as an alternative of the glue **120** used in the micromechanical resonator assembly **100** (of FIG. 1D).

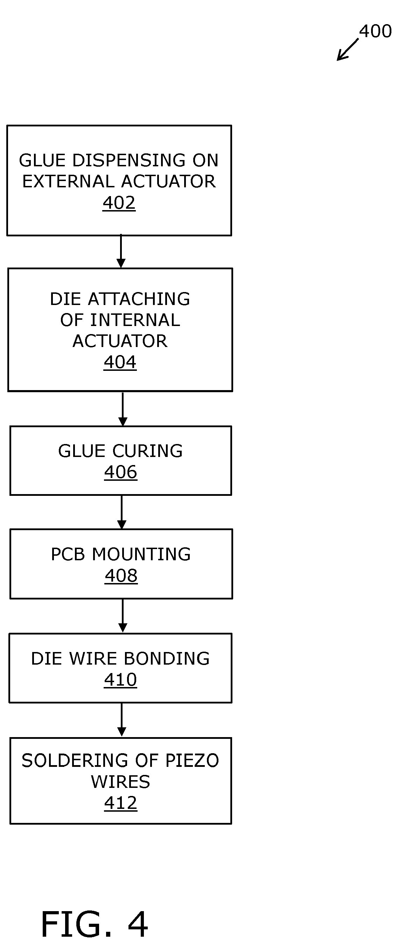

FIG. 4 is a flowchart of a method that depicts fabrication details of a micromechanical resonator assembly, in accordance with an embodiment of the present disclosure. FIG. 4 is described in conjunction with elements from FIGs. 1A, 1B, 1C, 1D, 2, 3A, 3B, 3C, 3D, and 3E. With reference to FIG. 4, there is shown a method **400** that depicts a step-by-step fabrication of a micromechanical resonator assembly such as the micromechanical resonator assembly **100** (of FIG. 1A). The method **400** is executed by the micromechanical resonator assembly **100** (of FIG. 1A). The method **400** includes steps **402, 404, 406, 408, 410,** and **412.**

At step **402,** the method **400** comprises glue dispensing on an external actuator. For example, the external actuator **104** (of FIG. 1A) includes the first end **104C** and the second end **104D.** The glue **120** (of FIG. 1C) is dispensed on the the second end **104D** of the external actuator **104.** The external actuator **104** may also be referred as a piezo ceramic actuator plate.

At step **404,** the method **400** comprises die attaching of an internal actuator on the external actuator. For example, the internal actuator **102** (of FIG. 1A) is mounted on the external actuator **104** by use of the glue **120.** The internal actuator **102** may also be referred as a micro mirror die. Alternatively stated, the internal actuator **102** (or the micro mirror die) is attached to the external actuator **104** by use of the glue **120.**

At step **406,** the method **400** comprises glue curing for mounting of the internal actuator (or the micro mirror die) to the external actuator. The glue curing refers to hardening or toughening of the glue **120.** The glue curing is performed by heating the glue **120** so that the mounting of the internal actuator **102** (or the micro mirror die) can be executed onto the external actuator **104.**

At step **408,** the method **400** comprises PCB mounting of the external actuator on a mounting base. For example, the external actuator **104** with the attached internal actuator **102** (or the micro mirror die) is mounted to the mounting base **106** by mechanical clamping, such as by use of the screw **116** (of FIG. 1C). Alternatively, the mounting of the external actuator **104** onto the mounting base **106** may be performed either by gluing or by direct soldering.

At step **410,** the method **400** comprises die wire bonding of the internal actuator to the mounting base. For example, the internal actuator **102** is electrically connected to the mounting base **106** by use of the second wire **122** (of FIG. 1C) through the wire bonding technique. The aluminium (Al) or gold (Au) wires are used to connect the bond pads of the internal actuator **102** to the boning pads of the mounting base **106.**

At step **412,** the method **400** comprises soldering of piezo wires for the electrical connection between the external actuator and the mounting base. For example, the external actuator **104** is electrically connected to the mounting base **106** by soldering of piezo wires (or conductor wires) between the external actuator **104** (or the piezo actuator pad) and the mounting base **106** (or the mounting base pad areas).

The steps **402** to **412** are only illustrative and other alternatives can also be provided where one or more steps are added, one or more steps are removed, or one or more steps are provided in a different sequence without departing from the scope of the claims herein.

FIG. 5 is a schematic top view of a micromechanical resonator assembly, in accordance with another embodiment of the present disclosure. FIG. 5 is described in conjunction with elements from FIGs. 1A, 1B, 1C, 1D, 2, 3A, 3B, 3C, 3D, 3E, and 4. With reference to FIG. 5, there is shown a micromechanical resonator assembly **500** that includes an internal actuator **502,** an external actuator **504** and a mounting base **506.** The internal actuator **502** includes an oscillation body **508** which further includes a micro mirror plate **508A** mounted on a spring **508B.** The external actuator **504** includes a first end **504C** and a second end **504D.** The oscillation body **508** is represented by a dashed rectangular box which is used for illustration purpose only and does not form a part of circuitry.

The internal actuator **502,** the external actuator **504** and the mounting base **506** correspond to the internal actuator **102,** the external actuator 104 and the mounting base **106,** respectively, of the micromechanical resonator assembly **100.**

In the top view, the micromechanical resonator assembly **500** appears to have a rectangular shape and a double-sided clamping of the external actuator **504.** The external actuator **504** appears to as a rectangular piezo beam in the top view. In the double-sided (or two-sided) clamping of the external actuator **504,** the external actuator **504** is mounted on the mounting base **506** by use of both the ends such as the first end **504C** and the second end **504D.** And the internal actuator **502** is mounted between the first end **504C** and the second end **504D,** that is at centre or near to centre of the external actuator **504.** The micro mirror plate **508A** of the oscillation body **508** appears to have a circular shape in the top view of the micromechanical resonator assembly **500.**

FIG. 6 is a schematic top view of a micromechanical resonator assembly, in accordance with yet another embodiment of the present disclosure. FIG. 6 is described in conjunction with elements from FIGs. 1A, 1B, 1C, 1D, 2, 3A, 3B, 3C, 3D, 3E, and 4. With reference to FIG. 6, there is shown a micromechanical resonator assembly **600** that includes an internal actuator **602,** an external actuator **604** and a mounting base **606.** The internal actuator **602** includes an oscillation body **608** which further includes a micro mirror plate **608A** mounted on a spring **608B.** The oscillation body **608** is represented by a dashed rectangular box which is used for illustration purpose only and does not form a part of circuitry.

The internal actuator **602,** the external actuator **604** and the mounting base **606** correspond to the internal actuator **102,** the external actuator **104** and the mounting base **106,** respectively, of the micromechanical resonator assembly **100.**

In the top view, the micromechanical resonator assembly **600** appears to have a circular shape. More specifically, in the micromechanical resonator assembly **600,** the external actuator **604** has the circular shape. The external actuator **604** is mounted on the mounting base **606** by use of a portion of its circular periphery. The internal actuator **602** is mounted at the centre of the external actuator **604.** In another embodiment, the external actuator **604** may have different shapes, such as elliptical or trapezoidal shape.

FIG. 7 is an illustration of an exemplary implementation of a micromechanical resonator assembly in a laser scanning or laser projection system, in accordance with an embodiment of the present disclosure. FIG. 7 is described in conjunction with elements from FIGs. 1A, 1B, 1C, 1D, 2, 3A, 3B, 3C, 3D, 4, 5, and 6. With reference to FIG. 7, there is shown a laser projection system **700** that includes a light engine **702.** The light engine **702** further includes a microcontroller **704,** a red-green-blue (RGB) laser **706,** a plurality of optical elements **708,** and a micromechanical resonator assembly **710.** There is further shown a plurality of projected rays **712,** a reflection surface **714** and a human eye **716.** The plurality of optical elements **708** includes an optical lens **708A** and a prism **708B.**

The laser projection system **700** (or a laser projector) is configured to project a laser beam on a screen in order to create a moving image either for entertainment or a professional use. The laser projection system **700** uses the RGB laser **706** and therefore, creates a coloured image on the screen. The laser projection system **700** is used in head-up display projection, laser headlights, active scene or object lightning, projection of information, for laser scanning in a light detection and ranging (LiDAR) system, laser projection in augmented reality (AR)/ virtual reality (VR) glasses or helmets, and the like.

The light engine **702** is configured to control the intensity (or brightness) of the created image, colour of the image, projection angle of the image and resolution of the image by use of a control circuitry (such as the microcontroller **704),** the plurality of optical elements **708** and the micromechanical resonator assembly **710.** The light engine **702** is based on an optical micro-electro-mechanical (MEM) technology which uses a micro-mirror device (such as the micromechanical resonator assembly **710).**

The microcontroller **704** (also represented as µC) is configured to control functioning of all the components of the light engine **702** such as the RGB laser **706,** the plurality of optical elements **708** and the micromechanical resonator assembly **710.** The microcontroller **704** (i.e. µC) controls a light coming from a light source and provides the controlled light to the RGB laser **706.**

The RGB laser **706** is configured to produce a coloured image on the screen. The different colours of the RGB laser **706** that is red, grren and blue get combined into each other in a certain ratio in order to produce various colours of the image.

The optical lens **708A** of the plurality of optical elements **708** is configured to focus the RGB lights from the RGB laser **706** to the prism **708B.** The prism **708B** is configured to receive the focused lights from the optical lens **708A** and provides it to the micromechanical resonator assembly **710.** In this way, the plurality of optical elements **708** are used to focus the lights from the RGB laser **706** to the micromechanical resonator assembly **710.**

The micromechanical resonator assembly **710** corresponds to the micromechanical resonator assembly **100** (of FIGs. 1A-1D) and its alternative implementation forms which have been described in FIGs. 3A-3D, 5 and 6. The micromechanical resonator assembly **710** is configured to project the received focused light from the plurality of optical elements **708** to the reflection surface **714** by use of the plurality of projected rays **712.** The micromechanical resonator assembly **710** is configured to produce an image with high resolution since each mirror of the micromechanical resonator assembly **710** is configured to create one or more pixels of the produced image. The micromechanical resonator assembly **710** may also be referred as a MEMS mirror with external piezo mounting. In another implementation, the micromechanical resonator assembly **710** may include an array of micro-mirrors.

The plurality of projected rays **712** get reflected from the reflection surface **714** (e.g. reflection surface of google glass) and enter into the human eye **716.** Due to the reflection of the plurality of projected rays **712** from the reflection surface **714,** a coloured and moving image become visible to the human eye **716.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure within the scope of the claims.

## Claims

1. A micromechanical resonator assembly (100, 300A, 300B, 300C, 300D, 500, 600, 710) comprising:
- an internal actuator (102, 302, 502, 602) which comprises an oscillation body (108, 308, 508, 608) configured to oscillate about one or more axes, the oscillation body (108, 308, 508, 608) having one or more eigenfrequencies,
- an external actuator (104, 304, 504, 604) which comprises an oscillating part (110), and
- a mounting base (106, 306, 506, 606) which comprises an electronic driving part (112),
- the internal actuator (102, 302, 502, 602) being mounted on the external actuator (104, 304, 504, 604) so as to form a coupled oscillation system, the external actuator (104, 304, 504, 604) being mounted on the mounting base (106, 306, 506, 606) and being electrically connected to the electronic driving part (112), for allowing excitation of the oscillation body (108, 308, 508, 608) of the internal actuator (102, 302, 502, 602) by transfer of energy from the oscillating part (110) to the oscillation body (108, 308, 508, 608)
**characterized in that** the electrical connection between the external actuator (104, 304, 504, 604) and the driving part (112) is obtained through wire bonding.

2. A micromechanical resonator assembly (100, 300A, 300B, 300C, 300D, 500, 600, 710) according to claim 1, wherein the electrical connection between the external actuator (104, 304, 504, 604) and the driving part (112) comprises at least one ground connection and two sensing signal connections.

3. A micromechanical resonator assembly (100, 300A, 300B, 300C, 300D, 500, 600, 710) according to claim 1, wherein the external actuator (104, 304, 504, 604) is mounted on the mounting base (106, 306, 506, 606) by mechanical fixation such as clamping, or by gluing.

4. A micromechanical resonator assembly (100, 300A, 300B, 300C, 300D, 500, 600, 710) according to any of claims 1 and 2, wherein the electrical connection between the external actuator (104, 304, 504, 604) and the driving part (112) is obtained through direct soldering of the external actuator (104, 304, 504, 604) onto the mounting base (106, 306, 506, 606), so as to ensure both electrical connection and fixation of the external actuator (104, 304, 504, 604) on the mounting base (106, 306, 506, 606).

5. A micromechanical resonator assembly (100, 300A, 300B, 300C, 300D, 500, 600, 710) according to any of claims 1 to 4, wherein the internal actuator (102, 302, 502, 602) comprises an internal sensor (118) electrically connected to the driving part (112), such as to allow reading out by the driving part (112) of a position feedback signal of the oscillation body (108, 308, 508, 608).

6. A micromechanical resonator assembly (100, 300A, 300B, 300C, 300D, 500, 600, 710) according to claim 5, wherein the electrical connection between the internal sensor (118) and the driving part (112) is obtained by wire bonding or flexible cable soldering.

7. A micromechanical resonator assembly (100, 300A, 300B, 300C, 300D, 500, 600, 710) according to any of claims 1 to 6, wherein the internal actuator (102, 302, 502, 602) is mounted on the external actuator (104, 304, 504, 604) by gluing.

8. A micromechanical resonator assembly (100, 300A, 300B, 300C, 300D, 500, 600, 710) according to claim 5, wherein the electrical connection between the internal sensor (118) and the driving part (112) is obtained by direct soldering of the internal sensor (118) onto the external actuator (104, 304, 504, 604), so as to ensure both electrical connection and fixation of the internal sensor (118) on the external actuator (104, 304, 504, 604).

9. A micromechanical resonator assembly (100, 300A, 300B, 300C, 300D, 500, 600, 710) according to any of claims 1 to 8, wherein the external actuator (104, 304, 504, 604) comprises at least two ends and is mounted on the mounting base (106, 306, 506, 606) by one of said two ends, the internal actuator (102, 302, 502, 602) being mounted on the external actuator (104, 304, 504, 604) at the other one of said two ends.

10. A micromechanical resonator assembly (100, 300A, 300B, 300C, 300D, 500, 600, 710) according to any of claims 1 to 8, wherein the external actuator (104, 304, 504, 604) comprises at least two ends and is mounted on the mounting base (106, 306, 506, 606) by each of said two ends, the internal actuator (102, 302, 502, 602) being mounted on the external actuator (104, 304, 504, 604) between said two ends.

11. A micromechanical resonator assembly (100, 300A, 300B, 300C, 300D, 500, 600, 710) according to any of claims 1 to 8, wherein the external actuator (104, 304, 504, 604) has a circular shape and is mounted on the mounting base (106, 306, 506, 606) by a portion of its periphery, the internal actuator (102, 302, 502, 602) being mounted on the external actuator (104, 304, 504, 604) at the centre of said external actuator (104, 304, 504, 604).

12. A micromechanical resonator assembly (100, 300A, 300B, 300C, 300D, 500, 600, 710) according to any of claims 1 to 11, wherein the external actuator (104, 304, 504, 604) comprises an opening (328), the internal actuator (102, 302, 502, 602) comprising a mirror plate (108A) and being mounted on the external actuator (104, 304, 504, 604) so as to cover said opening (328) on a first side of said external actuator (104, 304, 504, 604), and so as to create an optical path from a light source, located on a second side opposite to said first side, to the mirror plate (108A) through said opening (328).

13. A micromechanical resonator assembly (100, 300A, 300B, 300C, 300D, 500, 600, 710) according to any of claims 1 to 12, said assembly being a micro mirror scanner, the external actuator (104, 304, 504, 604) being a piezoelectric actuator and the internal actuator (102, 302, 502, 602) comprising a piezoelectric or electrostatic sensor.

14. A method of fabricating a micromechanical resonator assembly (100, 300A, 300B, 300C, 300D, 500, 600, 710) comprising an internal actuator (102, 302, 502, 602) which comprises an oscillation body (108, 308, 508, 608) configured to oscillate about one or more axes, an external actuator (104, 304, 504, 604) which comprises an oscillating part (110), and a mounting base (106, 306, 506, 606) which comprises electronic driving part (112), said method comprising mounting the internal actuator (102, 302, 502, 602) on the external actuator (104, 304, 504, 604) so as to form a coupled oscillating system, and mounting the external actuator (104, 304, 504, 604) on the mounting base (106, 306, 506, 606) so as to electrically connect the external actuator (104, 304, 504, 604) to the electronic driving part (112), for allowing excitation of the oscillation body (108, 308, 508, 608) of the internal actuator (102, 302, 502, 602) by transfer of energy from the oscillating part (110) to the oscillation body (108, 308, 508, 608); wherein the electrical connection between the external actuator (104, 304, 504, 604) and the driving part (112) is obtained through wire bonding.

## Patentansprüche

1. Mikromechanische Resonatoranordnung (100, 300A, 300B, 300C, 300D, 500, 600, 710), die umfasst:
- einen internen Aktuator (102, 302, 502, 602), der einen Schwingkörper (108, 308, 508, 608) umfasst, der konfiguriert ist, um um eine oder mehrere Achsen zu schwingen, wobei der Schwingkörper (108, 308, 508, 608) eine oder mehrere Eigenfrequenzen aufweist,
- einen externen Aktuator (104, 304, 504, 604), der ein Schwingteil (110) umfasst, und
- eine Montagebasis (106, 306, 506, 606), die ein elektronisches Antriebsteil (112) umfasst,
- wobei der interne Aktuator (102, 302, 502, 602) auf dem externen Aktuator (104, 304, 504, 604) montiert ist, um ein gekoppeltes Schwingungssystem zu bilden, wobei der externe Aktuator (104, 304, 504, 604) auf der Montagebasis (106, 306, 506, 606) montiert und elektrisch mit dem elektronischen Antriebsteil (112) verbunden ist, um eine Anregung des Schwingkörpers (108, 308, 508, 608) des internen Aktuators (102, 302, 502, 602) durch Energieübertragung von dem Schwingteil (110) auf den Schwingkörper (108, 308, 508, 608) zu ermöglichen, **dadurch gekennzeichnet, dass** die elektrische Verbindung zwischen dem externen Aktuator (104, 304, 504, 604) und dem Antriebsteil (112) durch Drahtanschluss hergestellt wird.

2. Mikromechanische Resonatoranordnung (100, 300A, 300B, 300C, 300D, 500, 600, 710) nach Anspruch 1, wobei die elektrische Verbindung zwischen dem externen Aktuator (104, 304, 504, 604) und dem Antriebsteil (112) mindestens eine Masseverbindung und zwei Sensorsignalverbindungen umfasst.

3. Mikromechanische Resonatoranordnung (100, 300A, 300B, 300C, 300D, 500, 600, 710) nach Anspruch 1, wobei der externe Aktuator (104, 304, 504, 604) durch mechanische Befestigung, beispielsweise Klemmen, oder durch Kleben auf der Montagebasis (106, 306, 506, 606) montiert ist.

4. Mikromechanische Resonatoranordnung (100, 300A, 300B, 300C, 300D, 500, 600, 710) nach einem der Ansprüche 1 und 2, wobei die elektrische Verbindung zwischen dem externen Aktuator (104, 304, 504, 604) und dem Antriebsteil (112) durch direktes Auflöten des externen Aktuators (104, 304, 504, 604) auf die Montagebasis (106, 306, 506, 606) hergestellt wird, um sowohl die elektrische Verbindung als auch die Befestigung des externen Aktuators (104, 304, 504, 604) auf der Montagebasis (106, 306, 506, 606) sicherzustellen.

5. Mikromechanische Resonatoranordnung (100, 300A, 300B, 300C, 300D, 500, 600, 710) nach einem der Ansprüche 1 bis 4, wobei der interne Aktuator (102, 302, 502, 602) einen internen Sensor (118) umfasst, der elektrisch mit dem Antriebsteil (112) verbunden ist, um das Auslesen eines Positionsrückkopplungssignals des Schwingkörpers (108, 308, 508, 608) durch das Antriebsteil (112) zu ermöglichen.

6. Mikromechanische Resonatoranordnung (100, 300A, 300B, 300C, 300D, 500, 600, 710) nach Anspruch 5, wobei die elektrische Verbindung zwischen dem internen Sensor (118) und dem Antriebsteil (112) durch Drahtanschluss oder flexibles Kabellöten hergestellt wird.

7. Mikromechanische Resonatoranordnung (100, 300A, 300B, 300C, 300D, 500, 600, 710) nach einem der Ansprüche 1 bis 6, wobei der interne Aktuator (102, 302, 502, 602) durch Kleben auf dem externen Aktuator (104, 304, 504, 604) montiert ist.

8. Mikromechanische Resonatoranordnung (100, 300A, 300B, 300C, 300D, 500, 600, 710) nach Anspruch 5, wobei die elektrische Verbindung zwischen dem internen Sensor (118) und dem Antriebsteil (112) durch direktes Auflöten des internen Sensors (118) auf den externen Aktuator (104, 304, 504, 604) hergestellt wird, um sowohl die elektrische Verbindung als auch die Befestigung des internen Sensors (118) auf dem externen Aktuator (104, 304, 504, 604) sicherzustellen.

9. Mikromechanische Resonatoranordnung (100, 300A, 300B, 300C, 300D, 500, 600, 710) nach einem der Ansprüche 1 bis 8, wobei der externe Aktuator (104, 304, 504, 604) mindestens zwei Enden umfasst und mit einem der beiden Enden auf der Montagebasis (106, 306, 506, 606) montiert ist, während der interne Aktuator (102, 302, 502, 602) an dem anderen der beiden Enden auf dem externen Aktuator (104, 304, 504, 604) montiert ist.

10. Mikromechanische Resonatoranordnung (100, 300A, 300B, 300C, 300D, 500, 600, 710) nach einem der Ansprüche 1 bis 8, wobei der externe Aktuator (104, 304, 504, 604) mindestens zwei Enden umfasst und mit jedem dieser beiden Enden auf der Montagebasis (106, 306, 506, 606) montiert ist, wobei der interne Aktuator (102, 302, 502, 602) zwischen den beiden Enden auf dem externen Aktuator (104, 304, 504, 604) montiert ist.

11. Mikromechanische Resonatoranordnung (100, 300A, 300B, 300C, 300D, 500, 600, 710) nach einem der Ansprüche 1 bis 8, wobei der externe Aktuator (104, 304, 504, 604) eine kreisförmige Form aufweist und mit einem Teil seines Umfangs auf der Montagebasis (106, 306, 506, 606) montiert ist, wobei der interne Aktuator (102, 302, 502, 602) in der Mitte des externen Aktuators (104, 304, 504, 604) auf dem externen Aktuator (104, 304, 504, 604) montiert ist.

12. Mikromechanische Resonatoranordnung (100, 300A, 300B, 300C, 300D, 500, 600, 710) nach einem der Ansprüche 1 bis 11, wobei der externe Aktuator (104, 304, 504, 604) eine Öffnung (328) umfasst, der interne Aktuator (102, 302, 502, 602) eine Spiegelplatte (108A) umfasst und auf dem externen Aktuator (104, 304, 504, 604) derart montiert ist, dass er die Öffnung (328) auf einer ersten Seite des externen Aktuators (104, 304, 504, 604) abdeckt und dass er einen optischen Pfad von einer Lichtquelle, die sich auf einer zweiten Seite gegenüber der ersten Seite befindet, durch die Öffnung (328) zu der Spiegelplatte (108A) erzeugt.

13. Mikromechanische Resonatoranordnung (100, 300A, 300B, 300C, 300D, 500, 600, 710) nach einem der Ansprüche 1 bis 12, wobei die Anordnung ein Mikrospiegelscanner ist, wobei der externe Aktuator (104, 304, 504, 604) ein piezoelektrischer Aktuator ist und der interne Aktuator (102, 302, 502, 602) einen piezoelektrischen oder elektrostatischen Sensor umfasst.

14. Verfahren zum Herstellen einer mikromechanischen Resonatoranordnung (100, 300A, 300B, 300C, 300D, 500, 600, 710), die einen internen Aktuator (102, 302, 502, 602), der einen Schwingkörper (108, 308, 508, 608) umfasst, der konfiguriert ist, um um eine oder mehrere Achsen zu schwingen, einen externen Aktuator (104, 304, 504, 604), der ein Schwingteil (110) umfasst und eine Montagebasis (106, 306, 506, 606) umfasst, die ein elektronisches Antriebsteil (112) umfasst, wobei das Verfahren das Montieren des internen Aktuators (102, 302, 502, 602) auf dem externen Aktuator (104, 304, 504, 604), um ein gekoppeltes Schwingungssystem zu bilden, und das Montieren des externen Aktuators (104, 304, 504, 604) auf der Montagebasis (106, 306, 506, 606) umfasst, um den externen Aktuator (104, 304, 504, 604) elektrisch mit dem elektronischen Antriebsteil (112) zu verbinden, um die Anregung des Schwingkörpers (108, 308, 508, 608) des internen Aktuators (102, 302, 502, 602) durch Energieübertragung von dem Schwingteil (110) auf den Schwingkörper (108, 308, 508, 608) zu ermöglichen;
wobei die elektrische Verbindung zwischen dem externen Aktuator (104, 304, 504, 604) und dem Antriebsteil (112) durch Drahtanschluss hergestellt wird.

## Revendications

1. Ensemble résonateur micromécanique (100, 300A, 300B, 300C, 300D, 500, 600, 710) comprenant :
- un actionneur interne (102, 302, 502, 602) qui comprend un corps d'oscillation (108, 308, 508, 608) configuré pour osciller autour d'un ou plusieurs axes, le corps d'oscillation (108, 308, 508, 608) ayant une ou plusieurs fréquences propres,
- un actionneur externe (104, 304, 504, 604) qui comprend une partie oscillante (110), et
- une base de montage (106, 306, 506, 606) qui comprend une partie d'entraînement électronique (112),
- l'actionneur interne (102, 302, 502, 602) étant monté sur l'actionneur externe (104, 304, 504, 604) de manière à former un système d'oscillation couplé, l'actionneur externe (104, 304, 504, 604) étant monté sur la base de montage (106, 306, 506, 606) et étant connecté électriquement à la partie d'entraînement électronique (112), pour permettre l'excitation du corps d'oscillation (108, 308, 508, 608) de l'actionneur interne (102, 302, 502, 602) par transfert d'énergie de la partie oscillante (110) au corps d'oscillation (108, 308, 508, 608) **caractérisé en ce que** la connexion électrique entre l'actionneur externe (104, 304, 504, 604) et la partie d'entraînement (112) est obtenue par câblage par fil.

2. Ensemble résonateur micromécanique (100, 300A, 300B, 300C, 300D, 500, 600, 710) selon la revendication 1, dans lequel la connexion électrique entre l'actionneur externe (104, 304, 504, 604) et la partie d'entraînement (112) comprend au moins une connexion de masse et deux connexions de signal de détection.

3. Ensemble résonateur micromécanique (100, 300A, 300B, 300C, 300D, 500, 600, 710) selon la revendication 1, dans lequel l'actionneur externe (104, 304, 504, 604) est monté sur la base de montage (106, 306, 506, 606) par fixation mécanique telle que le serrage, ou par collage.

4. Ensemble résonateur micromécanique (100, 300A, 300B, 300C, 300D, 500, 600, 710) selon l'une quelconque des revendications 1 et 2, dans lequel la connexion électrique entre l'actionneur externe (104, 304, 504, 604) et la partie d'entraînement (112) est obtenue par soudure directe de l'actionneur externe (104, 304, 504, 604) sur la base de montage (106, 306, 506, 606), de manière à assurer à la fois la connexion électrique et la fixation de l'actionneur externe (104, 304, 504, 604) sur la base de montage (106, 306, 506, 606).

5. Ensemble résonateur micromécanique (100, 300A, 300B, 300C, 300D, 500, 600, 710) selon l'une quelconque des revendications 1 à 4, dans lequel l'actionneur interne (102, 302, 502, 602) comprend un capteur interne (118) connecté électriquement à la partie d'entraînement (112), de manière à permettre la lecture par la partie d'entraînement (112) d'un signal de retour de position du corps d'oscillation (108, 308, 508, 608).

6. Ensemble résonateur micromécanique (100, 300A, 300B, 300C, 300D, 500, 600, 710) selon la revendication 5, dans lequel la connexion électrique entre le capteur interne (118) et la partie d'entraînement (112) est obtenue par câblage par fil ou soudage de câbles flexibles.

7. Ensemble résonateur micromécanique (100, 300A, 300B, 300C, 300D, 500, 600, 710) selon l'une quelconque des revendications 1 à 6, dans lequel l'actionneur interne (102, 302, 502, 602) est monté sur l'actionneur externe (104, 304, 504, 604) par collage.

8. Ensemble résonateur micromécanique (100, 300A, 300B, 300C, 300D, 500, 600, 710) selon la revendication 5, dans lequel la connexion électrique entre le capteur interne (118) et la partie d'entraînement (112) est obtenue par soudure directe du capteur interne (118) sur l'actionneur externe (104, 304, 504, 604), de manière à assurer à la fois la connexion électrique et la fixation du capteur interne (118) sur l'actionneur externe (104, 304, 504, 604).

9. Ensemble résonateur micromécanique (100, 300A, 300B, 300C, 300D, 500, 600, 710) selon l'une quelconque des revendications 1 à 8, dans lequel l'actionneur externe (104, 304, 504, 604) comprend au moins deux extrémités et est monté sur la base de montage (106, 306, 506, 606) par l'une desdites deux extrémités, l'actionneur interne (102, 302, 502, 602) étant monté sur l'actionneur externe (104, 304, 504, 604) à l'autre desdites deux extrémités.

10. Ensemble résonateur micromécanique (100, 300A, 300B, 300C, 300D, 500, 600, 710) selon l'une quelconque des revendications 1 à 8, dans lequel l'actionneur externe (104, 304, 504, 604) comprend au moins deux extrémités et est monté sur la base de montage (106, 306, 506, 606) par chacune desdites deux extrémités, l'actionneur interne (102, 302, 502, 602) étant monté sur l'actionneur externe (104, 304, 504, 604) entre lesdites deux extrémités.

11. Ensemble résonateur micromécanique (100, 300A, 300B, 300C, 300D, 500, 600, 710) selon l'une quelconque des revendications 1 à 8, dans lequel l'actionneur externe (104, 304, 504, 604) a une forme circulaire et est monté sur la base de montage (106, 306, 506, 606) par une partie de sa périphérie, l'actionneur interne (102, 302, 502, 602) étant monté sur l'actionneur externe (104, 304, 504, 604) au centre dudit actionneur externe (104, 304, 504, 604).

12. Ensemble résonateur micromécanique (100, 300A, 300B, 300C, 300D, 500, 600, 710) selon l'une quelconque des revendications 1 à 11, dans lequel l'actionneur externe (104, 304, 504, 604) comprend une ouverture (328), l'actionneur interne (102, 302, 502, 602) comprenant une plaque miroir (108A) et étant monté sur l'actionneur externe (104, 304, 504, 604) de manière à couvrir ladite ouverture (328) sur un premier côté dudit actionneur externe (104, 304, 504, 604), et de manière à créer un chemin optique à partir d'une source de lumière, située sur un second côté opposé audit premier côté, vers la plaque miroir (108A) à travers ladite ouverture (328).

13. Ensemble résonateur micromécanique (100, 300A, 300B, 300C, 300D, 500, 600, 710) selon l'une quelconque des revendications 1 à 12, ledit ensemble étant un scanner à micro-miroir, l'actionneur externe (104, 304, 504, 604) étant un actionneur piézoélectrique et l'actionneur interne (102, 302, 502, 602) comprenant un capteur piézoélectrique ou électrostatique.

14. Procédé de fabrication d'un ensemble résonateur micromécanique (100, 300A, 300B, 300C, 300D, 500, 600, 710) comprenant un actionneur interne (102, 302, 502, 602) qui comprend un corps d'oscillation (108, 308, 508, 608) configuré pour osciller autour d'un ou de plusieurs axes, un actionneur externe (104, 304, 504, 604) qui comprend une partie oscillante (110), et une base de montage (106, 306, 506, 606) qui comprend une partie électronique d'entraînement (112), ledit procédé comprenant le montage de l'actionneur interne (102, 302, 502, 602) sur l'actionneur externe (104, 304, 504, 604) de manière à former un système oscillant couplé, et le montage de l'actionneur externe (104, 304, 504, 604) sur la base de montage (106, 306, 506, 606) de manière à connecter électriquement l'actionneur externe (104, 304, 504, 604) à la partie d'entraînement électronique (112), afin de permettre l'excitation du corps d'oscillation (108, 308, 508, 608) de l'actionneur interne (102, 302, 502, 602) par transfert d'énergie de la partie oscillante (110) au corps d'oscillation (108, 308, 508, 608) ;
dans lequel la connexion électrique entre l'actionneur externe (104, 304, 504, 604) et la partie d'entraînement (112) est obtenue par câblage par fil.
